# EUROPEAN PATENT SPECIFICATION

(11) **EP 4 231 608 B1**
(45) Date of publication and mention of the grant of the patent: **28.01.2026**
(21) Application number: 22382123.2
(22) Date of filing: 16.02.2022
(51) Int. Cl.: H04L 65/1104, H04L 65/1016, H04L 65/1063, H04L 65/1069, H04L 65/1096

(54) **METHODS OF MANAGING SERVICES FOR A TELECOMMUNICATIONS SESSION AND SERVERS, COMPUTER SOFTWARE AND SYSTEMS FOR PERFORMING THE METHODS**
VERFAHREN ZUR VERWALTUNG VON DIENSTEN FÜR EINE TELEKOMMUNIKATIONSSITZUNG UND SERVER, COMPUTERSOFTWARE UND SYSTEME ZUR DURCHFÜHRUNG DER VERFAHREN
PROCÉDÉS DE GESTION DE SERVICES POUR UNE SESSION DE TÉLÉCOMMUNICATIONS ET SERVEURS, LOGICIEL INFORMATIQUE ET SYSTÈMES POUR EFFECTUER LES PROCÉDÉS

(43) Date of publication of application: 23.08.2023
(73) Proprietor: Vodafone Group Services Limited, Newbury, Berkshire RG14 2FN (GB)
(72) Inventor: DOMÍNGUEZ GONZÁLEZ, Rafael, London, W2 6BY (GB); MARTÍNEZ PEREA, Rogelio, London, W2 6BY (GB); BERJÓN VALLES, Ana, London, W2 6BY (GB)
(74) Representative: Boult Wade Tennant LLP

(56) References cited:
- US-A1- 2014 133 362

## Description

### Technical field

This application relates to methods and systems for managing services provided for telecommunications sessions. More particularly, the application provides flexible methods for providing call services in which application servers providing the services can be located in a remote network.

### Background

Network operators currently provide services for telecommunications sessions within their networks by providing application servers that are hosted within the core network. This system has proved reliable in the past but does not offer much flexibility. With the uptake of cloud deployment around the world, telecommunication companies are realizing a desire to host application servers in the cloud. However, due to networking requirements, execution of services by application servers are limited to the application servers hosted in an operator-owned cloud network.

Alternatively, integration methods (such as PBX integration) are possible. However, PBX integration methods offer little flexibility and are not suited to applications of varying capacity. Moreover, an adaptation process may be required in order to export application servers into this model, which can be complex to set up.

Another alternative is to host the application server in a remote network and offer a Network to Network interface (NNI). However, this is also complex to set up. A NNI is designed to enable communication between networks. Therefore, exporting an application server in isolation is not possible because no network nodes are already available in the remote network (HSS, CSCF, HLR, etc). These nodes would need to be set up and maintained, which would greatly increase the complexity of the remote network.

The present invention aims to address the drawbacks in the prior art.

US 2014/133362 describes a method of correlating information relating to message in a SIP session.

### Summary

The scope of the present invention is defined in the claims.

In contrast to prior art application server integration methods, which are complex and offer limited flexibility, the present invention seeks to provide a simple and flexible approach. From the perspective of the application server, there is little or no difference with a regular SIP integration. From the perspective of the operator network, the application server appears to be integrated in a similar manner to a PBX integration. Therefore, this hybrid approach provides the flexibility of hosting the application server in the cloud, without the complexity of prior art solutions, which either require substantial modification to the application server (in the case of a PBX-like integration) or provisioning of a new IMS network with all associated nodes (in the case of a NNI solution).

The invention relates to a method, as further defined in claim 1, a server, as further defined in claim 13, and a computer software, as further defined in claim 14, for providing call service to telecommunication networks by application servers located in remote networks.

In a non-limiting example useful for understanding the invention, a method of managing services for a telecommunications session handled by a telecommunications network is provided. The method comprises:
receiving, at an invocation server in a remote network, wherein the remote network is remote from the telecommunications network, a first message initiating a telecommunications session, wherein the message is received from the telecommunications network via a secure signalling channel;
determining, based on the first message, one or more services required for the telecommunications session; and
based on the one or more services required, sending a second message to an application server in the remote network, wherein the application server is configured to provide one or more services, wherein the second message causes the application server to provide the one or more services for the telecommunications session.

The telecommunications network may be an Internet Protocol, IP, Multimedia Subsystem, IMS, network.

The invocation server may be configured to communicate with the application server using a modified IMS Service Control, ISC, interface. The modified ISC interface may include one or more additional requirements (compared to a standard ISC interface).

The modified ISC interface may require that a "call" parameter in a header of each message sent from the invocation server to the application server has the same value. In other words, the service name may be the same for each invocation scenario (orig or term).

The modified ISC interface may require that no Original Dialog Identifier, ODI, is added to a header of the second message.

The modified ISC interface may further require that no Original Dialog Identifier, ODI, is added to a header of messages sent from the application server to the invocation server in response to the messages from the invocation server to the application server.

The modified ISC interface may require that, if the one or more call services provided by the application server are triggered during the originating phase of the call, a header of the message sent to the application server comprises an "orig" parameter. Alternatively, different service names may be used, depending on whether the invocation is triggered by the originating or terminating phase of the call.

In the above requirements for a modified ISC interface, the "header" may be an X-sip header or a route header, for example.

The message to the application server may comprise an indication of the P-served user (PSU). This indication may be in the header of the message. The PSU may be the user whose service profile is accessed by the application server when an the message is received, where the message is originated by, originated on behalf of, or terminated to the PSU. This is described in RFC 5502, which is hereby incorporated by reference.

The session may be a session between a calling party and a called party. The session may be initiated by the calling party to the called party. The second message (and/or fourth and/or sixth message described below) may comprise an indication of the P-served user (PSU). The calling party (also referred to as party A) may be the PSU for the second message. The called party (also referred to as party B) may be the PSU for the fourth message. A redirected called party (also referred to as party C) may be the PSU for the sixth message.

Party B may be the PSU for the second message. For example, if party A is a subscriber of a different telecommunications network or if no services are required for party A then no message to the application server having party A as the PSU may be required.

The remote network may be cloud-hosted network. For example, the remote network may be an Amazon Web Services (AWS) network or an analogous cloud-hosting platform.

The session may be a Session Initiation Protocol, SIP, session.

The first message may be a SIP INVITE. Likewise, the second message and subsequent messages may also be SIP INVITEs. Alternatively, the first, second and/or subsequent messages could be SIP MESSAGE or SIP OPTIONS messages, for example.

The secure signalling channel may be a SIP trunk. The SIP trunk may provide a secure channel for SIP signalling between the operator network and the remote network across the internet.

The session may be a voice or video call. Alternatively, the session could be a messaging, gaming or news feed session, for example.

The call services may include one or more of the following:
call recording; and
call forwarding.

The session may be a session between a calling party and a called party. The application server may provide services to the calling party and/or the called party (which may also be referred to as the originating endpoint and terminating endpoint, respectively).

The method may further comprise receiving, from the application server, a third message in response to the second message, wherein the third message comprises instructions regarding the signalling route for the session (e.g. in SIP headers of the message, such as in X-sip or route headers).

The session may be a session between a calling party and a called party, wherein the second message comprises an indication that one or more services are required for the calling party, wherein the second message causes the application server to provide the one or more services for the calling party. The method may further comprise:
determining, by the invocation server, that one or more services are required for the called party of the telecommunications session; and
based on the one or more services required, sending a fourth message to the application server in the remote network, wherein the fourth message causes the application server to provide the one or more services for the called party.

By determining at the invocation server that further services are required (e.g. for both calling and called parties), unnecessary signalling may be avoided.

By providing a configuration in which the invocation server is aware of the routing requirements for the signalling, the number of messages sent via the secure signalling channel may be reduced. If the invocation server were not aware of the requirement for the signalling to be routed back to the application server (if the invocation server were not configured to respond to instructions regarding the required routing of the signalling), the signalling for the call may be routed through the secure signalling channel back to the operator network after the invocation server receives the third message. The operator network may then determine that services are required for the called party (in addition to the calling party) and may send another message via the secure signalling channel to the invocation server in the remote network. The method may then be repeated to fulfil the services for the called party. By configuring the invocation server as described above to determine that services are required for the called party, these additional messages to the operator network and back again may be avoided. Thus, the claimed methods may provide more efficient signalling with reduced setup times.

The invocation server may determine that one or more services are required for the called party based on SIP headers in the third message. In this case, services may be required for both the calling party and the called party (in other words, services are required during both the orig and term phases of the call).

The one or more services may all be provided by the application server or may be provided by a plurality of different application server in the remote network. In case the services are provided by different application servers, the second message may be sent to a first application server and the fourth message may be sent to a second application server.

The method may further comprise receiving a fifth message from the application server in response to the fourth message and sending a final message via the secure signalling channel. In this case, "final" means the last message to be sent by the invocation server in the processes for establishing this session. Further messages may be required between other entities in routing the remainder of the signalling to the terminating endpoint. Moreover, there may be other messages sent/received by the invocation server in response (e.g. 200 OK messages or messages for renegotiating session parameters). As described above, by configuring the invocation server to determine that services are required for the called party, additional messages to the operator network and back again via the secure signalling channel may be avoided. Thus, the claimed methods may provide more efficient signalling with reduced setup times by reducing the number of messages that are required to be communicated via the secure signalling channel (e.g. SIP trunk).

The service provided by the application server may be a call forwarding or redirect service. For example, party A calls party B. Party B has a redirect service and the application server redirects the call to party C. In this case, the message sent from the application server to the invocation server may comprise a redirected address (e.g. the address for party C). If the redirected address also requires one or more services, the invocation server may send a message back to the application server to fulfil the services on behalf of party C. As above, by configuring the invocation server to determine that the redirected party requires services, additional signalling to the operator network and back again via the secure signalling channel may be avoided.

In a specific example, services may be required for party A, party B and party C. In this case, the fifth message may comprise a redirected address (the address for party C) and may further comprise an indication that services are required for the redirected address.

The method may further comprise:
determining, by the invocation server, that the one or more services are required for the redirected address of the telecommunications session; and
based on the one or more services required, sending a sixth message to the application server in the remote network, wherein the sixth message causes the application server to provide the one or more services for the called party.

The method may further comprise receiving a seventh message (from the application server to the invocation server) in response to the sixth message and sending an eighth (and final) message via the secure signalling channel (e.g. SIP trunk).

The invocation server may determine that services are required for the redirected address based on headers in the fifth message. The redirected address may be referred to as the redirected called party, which is the new terminating endpoint as a result of redirection.

In another specific example, services may not be required for the calling party (e.g. because the calling party is not a subscriber of the operator network). In this case, the second and third messages may not be required. The fourth message sent from the invocation server to the application server in order to fulfil services on behalf of the called party (party B) may actually be the message sent after receiving the first message via the secure signalling channel. Then, the fifth message may comprise the redirected address (of party C) and the invocation server may send a sixth message to the application server to fulfil services on behalf of party C. For simplicity and consistency, the usual numbering will be adhered to, even though the "fourth", "fifth" and "sixth" messages may actually only be the second, third and fourth messages, if the second and third messages are omitted.

The method may further comprise:
determining, by the invocation server, that the one or more services are required for the redirected address of the telecommunications session; and
based on the one or more services required, sending a fourth message to the application server in the remote network, wherein the fourth message causes the application server to provide the one or more services for the redirected called party.

The method may further comprise receiving a fifth message (from the application server to the invocation server) in response to the fourth message and sending a sixth (and final) message via the secure signalling channel (e.g. SIP trunk).

The above methods may be performed by the invocation server in the remote network. The present invention also provides methods performed by the application server.

The session may be a session between a calling party and a called party. The method may further comprise:
receiving, by the application server, the second message from the invocation server;
determining, by the application server, whether the called party is served by the telecommunications network or a separate telecommunications network; and
sending, from the application server to the invocation server, a third message in response to the second message, wherein the third message comprises instructions regarding the signalling route for the session.

In other words, the application server may be configured to determine the next phase of the call and include instructions in the headers of the response to the invocation server. In this way, the invocation server may route the signalling effectively and efficiently, without needing to send signalling messages to the operator network (via the secure signalling channel) and then back to the invocation server again.

The instructions to the invocation server regarding the signalling route for the session may be included in headers of the message. The instructions may be included in a SIP header, X-sip header, custom X-action header and/or route header.

The method may further comprise setting up the call services on behalf of the calling party, called party or redirected party, in response to the message(s) from the invocation server.

The one or more services that the application server is configured to provide may comprise a call forwarding service. The application server may be configured to substitute an address of the called party with a redirected address. In other words, the application server may be configured to redirect the call (perform call retargeting).

The redirected address may be included in the fifth message sent from the application server to the invocation server.

The redirected address may be a party served by a different telecommunications network. In this case, the method may further comprise sending, by the invocation server, a final message via the secure signalling channel.

The redirected address may be a party served by the telecommunications network. In this case, the method may further comprise determining, by the invocation server, whether one or more services are required for the redirected address.

If the redirected address is a party served by the telecommunications network and the invocation server determines that one or more services are not required for the redirected address, the method may further comprise sending, by the invocation server, a final message via the secure signalling channel.

If the redirected address is a party served by the telecommunications network and the invocation server determines that one or more services are required for the redirected address, the method may further comprise sending a sixth message to the application server in the remote network (or another application server in the remote network).

The sixth message may be based on the one or more services required for the redirected address and may cause the application server (or other application server) to provide the one or more services for the redirected address.

The invocation server may determine whether one or more services are required based on the SIP headers in the fifth message.

The one or more services may be provided by the same application server or a different application server in the remote network.

Where it is stated that the redirected address is a party served by the telecommunications network or a different network. The skilled person would understand that the address *belongs to* that party or *causes signalling to be routed to* that party.

The method may further comprise determining, by the invocation server, that one or more additional services are required for the called party and, based on the one or more additional services required, sending an additional message to the application server in the remote network, wherein the additional message causes the application server to provide the one or more additional services for the called party.

The additional message (if required) may be sent by the invocation server after receiving the fifth message and before sending the sixth message.

The method may further comprise:
determining that an address of the called party (e.g. in the second message) comprises a routing prefix; and
removing the routing prefix from an address of the called party that is included in the third message.

The present invention also provides a server configured to perform the methods described above.

The present invention also provides computer software comprising instructions that, when executed on a processor of a computer, cause the computer to perform the methods described above.

The present invention also provides a system for managing services for sessions handled by a telecommunications network, the system comprising:
a remote network, wherein the remote network is remote from the telecommunications network, the remote network comprising:
an application server configured to provide services; and
an invocation server configured to:
   receive messages initiating telecommunications sessions from the telecommunications network via a secure signalling channel;
   for each message:
      determine one or more services required for the respective telecommunications session; and
      based on the one or more services required, send a message to the application server, wherein the message causes the application server to provide the one or more services for the respective telecommunications session.

### Brief description of the drawings

The present invention will now be described with reference to a number of non-limiting examples, which are illustrated in the following figures.
Figure 1 illustrates a system according to a specific example.
Figure 2 illustrates a flow diagram according to a first specific example.
Figure 3 illustrates a flow diagram according to a first specific example.
Figure 4 illustrates a flow diagram according to a second specific example.
Figure 5 illustrates a flow diagram according to a third specific example.

### Detailed description

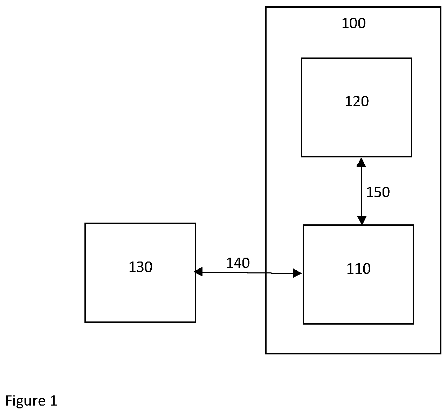

A system according to a specific example is illustrated in Figure 1, which includes:
a remote network 100;
a secure signalling channel 140 (such as a SIP Trunk) to integrate the remote network 100 with an operator network 130;
an application server 120 or "AS" (which may be a regular SIP application server);
an invocation server 110 (also called a Service Invocation Function "SIF"), which is the entity that enables communication between the operator network 130 and the application server 120; and
an interface 150 (such as a simplified SIP interface) to communicate between the invocation server 110 and the application server 120 (the interface may be called an App Services Invocation Protocol "ASIP").

The invocation server 110 implements logic that triggers the application server 120 only when needed. In the preferred implementation, the following principles are followed:
there is a single invocation per call phase (orig or term);
there is only one trigger per type (orig or term); and
because there is a single invocation, no ODI (Original Dialog Identifier) is required in route headers (in particular, no ODI is required in the second route header).

There are also a number of further optional implementation details that may be applied:
if the trigger is orig, the Route header may contain the "orig" parameter; and
only one service name ("call=") is preferably used (in other words, the "call" field may contain the same value in all invocations).

The application server 120 will determine:
if the called party (destination) is internal or external to the operator network;
what is the next phase of the call and will populate the custom X-Action header accordingly; and
if the R-URI or To header includes a RP (Routing Prefix), if it does, it will be stripped off.

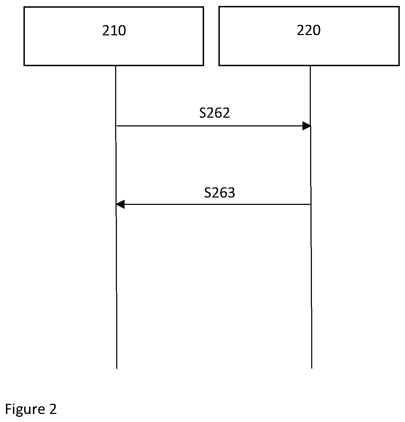

The messaging flow for a basic scenario is illustrated in Figure 2.

At step S262, invocation server 210 sends a message to application server 220. The message at step S262 may be a SIP INVITE comprising a PSU header and two or more Route headers.

At step S263, application server 220 sends a message to invocation server 210. The message at step S263 may be a SIP INVITE comprising an "X-Action:route" header and one or more Route headers, where the first Route header is the second Route header from the INVITE sent to the application server in step S262.

The invocation server 210 will invoke the application server following the simple rules described above. When the application server answers, it will describe the next action that the invocation server needs to perform.

Several use cases are provided below to illustrate the process.

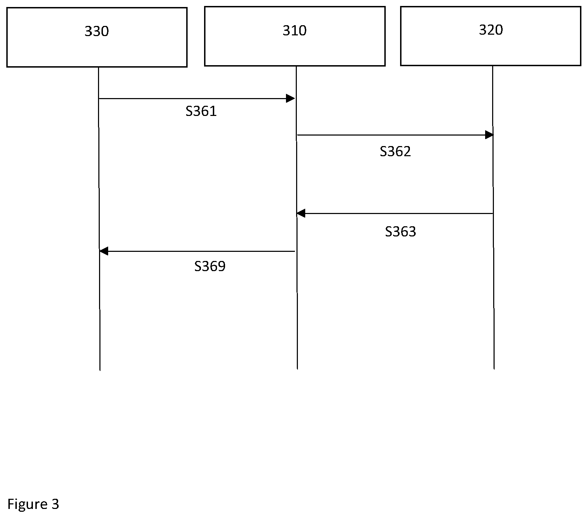

Figure 3 illustrates the messaging flow for an originating call (in which the calling party is served by the operator network) towards an external user (not served by the operator network). The illustrated steps are:

| | |
|---|---|
| S361: | INVITE <B> |
| S362: | INVITE <B> |
| | PSU:<A> |
| | Route:<IP-ApplicationServer;call=service;orig> |
| | Route:<IP-InvocationServer> |
| S363: | INVITE <B> |
| | X-Action: route |
| | Route:<IP-InvocationServer> |
| S369: | INVITE <B> |

At step S361, invocation server 310 receives a first message from operator network 330 via the secure signalling channel. The first message may be a SIP INVITE comprising an address of the called party, e.g. "INVITE <B>".

At step S362, the invocation server 310 sends a second message to the application server 320. The second message may be a SIP INVITE comprising the address of the called party e.g. "INVITE <B>. The second message may comprise a PSU header indicating the user on behalf of whom the services are activated. In this case, the services are activated on behalf of the calling party so the header is "PSU:<A>". The second message may comprise two or more Route headers. The first Route header may comprise an address of the application server 320. The first Route header may further comprise an indication of a service name e.g. "call=service". If the trigger is orig, the first Route header may further comprise an "orig" parameter. The second Route header may comprise an address of the invocation server 310.

At step S363, the application server 320 sends a third message to the invocation server 310. The third message may be a SIP INVITE comprising the address of the called party e.g. "INVITE <B>. The third message may comprise an "X-Action:route" header and one or more Route headers. The first Route header may be the second Route header from the message sent to the application server in step S362. The first Route header may comprise an address of the invocation server 310.

At step S369, the invocation server 310 determines that activation of further services is not required and sends a final message to the operator network 330 via the secure signalling channel. The final message may be a SIP INVITE comprising the address of the called party, e.g. "INVITE <B>".

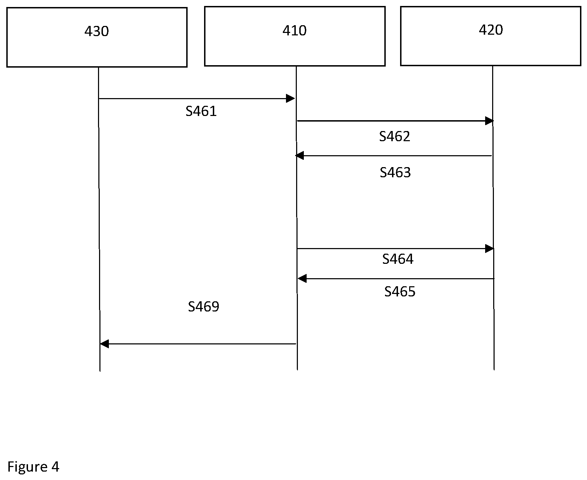

Figure 4 illustrates the messaging flow for an originating call (in which the calling party is served by the operator network) towards an internal user (in other words, the called party is also served by the operator network). The illustrated steps are:

| | |
|---|---|
| S461: | INVITE <B> |
| S462: | INVITE <B> |
| | PSU:<A> |
| | Route:<IP-ApplicationServer;call=service;orig> |
| | Route:<IP-InvocationServer> |
| S463: | INVITE <B> |
| | X-Action:term |
| | Route:<IP-InvocationServer> |
| | PSU:<B> |
| S464: | INVITE <B> |
| | PSU:<B>" |
| | Route:<IP-ApplicationServer;call=service> |
| | Route:<IP-InvocationServer> |
| S465: | INVITE <B> |
| | X-Action:route |
| | Route:<IP-InvocationServer> |
| S469: | INVITE <B> |

At step S461, the invocation server 410 receives a first message from operator network 430 via the secure signalling channel. The first message may be a SIP INVITE comprising an address of the called party.

At step S462, the invocation server 410 sends a second message to the application server 420. The second message may be a SIP INVITE comprising the address of the called party. The second message may comprise a PSU header indicating the user on behalf of whom the services are activated. In this case, the services are activated on behalf of the calling party so the header is "PSU:<A>". The second message may comprise two or more Route headers. The first Route header may comprise an address of the application server 420. The first Route header may further comprise an indication of a service name e.g. "call=service". If the trigger is orig, the first Route header may further comprise an "orig" parameter. The second Route header may comprise an address of the invocation server 410.

At step S463, the application server 420 sends a third message to the invocation server 410. The third message may be a SIP INVITE comprising the address of the called party. The application server may determine that one or more services are required for the terminating party of the session and the third message may therefore comprise an "X-Action:term" header, which indicates to the invocation server 410 that one or more services are required during the terminating phase of the call. The third message may comprise a PSU header indicating the user on behalf of whom the one or more services are required during the terminating phase of the call In this case, the services are required on behalf of the terminating party, which is party B so the header is "PSU:<B>". The third message may comprise one or more Route headers, where the first Route header is the second Route header from the second message sent to the application server in step S462. For example, the first route header of the third message may comprise an address of the invocation server.

At step S464, the invocation server 410 determines based on the headers that one or more services are required for the called party and sends a fourth message to the application server 420. The fourth message may be a SIP INVITE comprising the address of the called party. The fourth message may comprise a PSU header indicating the user on behalf of whom the services are activated. In this case, the services are activated on behalf of the called party so the header is "PSU:<B>". The fourth message may comprise two or more Route headers. The first Route header may comprise an address of the application server 420. The first Route header may further comprise an indication of a service name e.g. "call=service". The second Route header may comprise an address of the invocation server 410.

At step S465, the application server 420 sends a fifth message to the invocation server 410. The fifth message may be a SIP INVITE comprising the address of the called party. The fifth message may comprise an "X-Action:route" header and one or more Route headers. The first Route header may be the second Route header from the message sent to the application server in step S464. The first route header may comprise an address of the invocation server 410.

At step S469, the invocation server 410 determines that activation of further services is not required and sends a final message to the operator network 430 via the secure signalling channel. The final message may be a SIP INVITE comprising the address of the called party, e.g. "INVITE <B>".

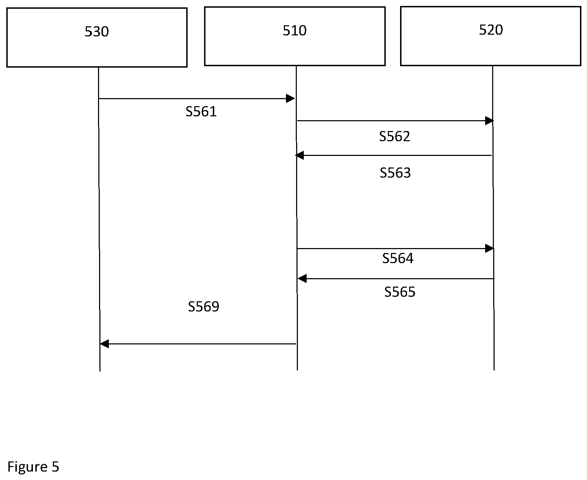

Figure 5 illustrates the messaging flow for an originating call (in which the calling party is served by the operator network) towards an internal user (in other words, the called party is also served by the operator network) with retargeting to external (in other words, the called party has a call redirect service enabled that causes the call to be redirected to another party, where the redirected party is not served by the operator network). The illustrated steps are:

| | |
|---|---|
| S561: | INVITE <B> |
| S562: | INVITE <B> |
| | PSU:<A> |
| | Route:<IP-ApplicationServer;call=service;orig |
| | Route:<IP-InvocationServer> |
| S563: | INVITE <B> |
| | X-Action:term |
| | Route:<IP-InvocationServer> |
| | PSU:<B> |
| S564: | INVITE <B> |
| | PSU:<B> |
| | Route:<IP-ApplicationServer;call=service> |
| | Route:<IP-InvocationServer> |
| S565: | INVITE <C> |
| | X-Action: route |
| | Route:<IP-InvocationServer> |
| S569: | INVITE <C> |

At step S561, the invocation server 510 receives a first message from operator network 530 via the secure signalling channel. The first message may be a SIP INVITE comprising an address of the called party.

At step S562, the invocation server 510 sends a second message to the application server 520. The second message may be a SIP INVITE comprising the address of the called party. The second message may comprise a PSU header indicating the user on behalf of whom the services are activated. In this case, the services are activated on behalf of the calling party so the header is "PSU:<A>". The second message may comprise two or more Route headers. The first Route header may comprise an address of the application server 520. The first Route header may also comprise a service indicator "call=service". The first Route header may also comprise an indication of the trigger, which is "orig" in this case (and therefore the PSU is the calling party, party A). The second Route header may comprise an address of the invocation server 510.

At step S563, the application server 520 sends a third message to the invocation server 510. The third message may be a SIP INVITE comprising the address of the called party. The application server may determine that one or more services are required for the terminating party of the session and the third message may therefore comprise an "X-Action:term" header, which indicates to the invocation server 510 that one or more services are required during the terminating phase of the call. The third message may comprise a PSU header indicating the user on behalf of whom the one or more services are required during the terminating phase of the call In this case, the services are required on behalf of the terminating party, which is party B so the header is "PSU:<B>". The third message may comprise one or more Route headers, where the first Route header is the second Route header from the INVITE sent to the application server in step S562.

At step S564, the invocation server 510 determines based on the headers that one or more services are required for the called party and sends a fourth message to the application server 520. The fourth message may be a SIP INVITE comprising the address of the called party. The fourth message may comprise a PSU header indicating the user on behalf of whom the services are activated. In this case, the services are activated on behalf of the called party so the header is "PSU:<B>". The fourth message may comprise two or more Route headers. The first Route header may comprise an address of the application server 520 and an indication of the service name "call=service". The second Route header may comprise an address of the invocation server 510.

At step S565, the application server 520 determines that the called party has a retargeting service enabled and sends a fifth message to the invocation server 510 indicating that the session should be retargeted to party C (in this case, an external party). The fifth message may be a SIP INVITE comprising the address of the party to whom the session should be retargeted e.g. "INVITE <C>". The fifth message may comprise an "X-Action:route" header and one or more Route headers, where the first Route header is the second Route header from the INVITE sent to the application server in step S564.

At step S569, the invocation server 510 determines that activation of further services is not required and sends a final message to the operator network 530 via the secure signalling channel. The final message may be a SIP INVITE comprising the address of the retargeted party, e.g. "INVITE <C>".

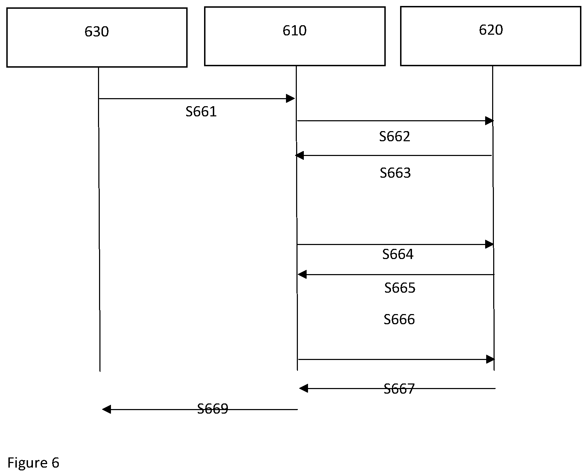

Figure 6 illustrates the messaging flow for an originating call (in which the calling party is served by the operator network) towards an internal user (in other words, the called party is also served by the operator network) with retargeting to internal (in other words, the called party has a call redirect service enabled that causes the call to be redirected to another party, where the redirected party is served by the operator network). The illustrated steps are:

| | |
|---|---|
| S661: | INVITE <B> |
| S662: | INVITE <B> |
| | PSU:<A> |
| | Route:<IP-ApplicationServer;call=service;orig> |
| | Route:<IP-InvocationServer> |
| S663: | INVITE <B> |
| | X-Action:term |
| | Route:<IP-InvocationServer> |
| | PSU:<B> |
| S664: | INVITE <B> |
| | PSU:<B> |
| | Route:<IP-ApplicationServer;call=service> |
| | Route:<IP-InvocationServer> |
| S665: | INVITE <C> |
| | X-Action:term |
| | Route:<IP-InvocationServer> |
| | PSU: <C> |
| S666: | INVITE <C> |
| | PSU:<C> |
| | Route:<IP-ApplicationServer;call=service> |
| | Route:<IP-InvocationServer> |
| S667: | INVITE <C> |
| | X-Action:route |
| | Route:<IP-InvocationServer> |
| S669: | INVITE <C> |

At step S661, the invocation server 610 receives a first message from operator network 630 via the secure signalling channel. The first message may be a SIP INVITE comprising an address of the called party.

At step S662, the invocation server 610 sends a second message to the application server 620. The second message may be a SIP INVITE comprising the address of the called party. The second message may comprise a PSU header indicating the user on behalf of whom the services are activated. In this case, the services are activated on behalf of the calling party so the header is "PSU:<A>". The second message may comprise two or more Route headers. The first route header may comprise an address of the application server, a service name ("call=service") and a parameter indicating the trigger, which in this case is "orig". The second route header may comprise an address of the invocation server.

At step S663, the application server 620 determines that one or more services are required for the terminating party of the session and sends a third message to the invocation server 610. The third message may be a SIP INVITE comprising the address of the called party. As a result of the application server 620 determining that one or more services are required for the terminating party of the session, the third message may comprise an "X-Action:term" header, which indicates to the invocation server 610 that one or more services are required for the called party (during the terminating phase of the call). The third message may comprise a PSU header indicating the user on behalf of whom the one or more services are required during the terminating phase of the call In this case, the services are required on behalf of the terminating party, which is party B so the header is "PSU:<B>". The third message may comprise one or more Route headers, where the first Route header is the second Route header from the INVITE sent to the application server in step S662.

At step S664, the invocation server 610 determines based on the headers that one or more services are required for the called party and sends a fourth message to the application server 620. The fourth message may be a SIP INVITE comprising the address of the called party. The fourth message may comprise a PSU header indicating the user on behalf of whom the services are activated. In this case, the services are activated on behalf of the called party so the header is "PSU:<B>". The fourth message may comprise two or more Route headers.

At step S665, the application server 620 determines that the called party has a retargeting service enabled. Then, the application server 620 determines that the party to whom the call should be retargeted (party C) is an internal party (served by the operator network). Then, the application server 620 determines that one or more services are required for the retargeted party, and sends a fifth message to the invocation server 610 indicating that the session should be retargeted to party C (in this case, an internal party). The fifth message may be a SIP INVITE comprising the address of the party to whom the session should be retargeted e.g. "INVITE <C>". The address of the retargeted party may be referred to as a "redirected address". The fifth message may comprise an "X-Action:term" header, which indicates to the invocation server 610 that one or more services are required for the retargeted party during the terminating phase of the call. The fifth message may comprise a PSU header indicating the user on behalf of whom the one or more services are required during the terminating phase of the call. In this case, the services are required on behalf of the retargeted party, which is party C so the header is "PSU:<C>".

At step S666, the invocation server 610 determines, based on the headers of the fifth message, that one or more services are required for the retargeted party and sends a sixth message to the application server 620. The sixth message may be a SIP INVITE comprising the address of the retargeted party e.g. "INVITE <C>". The sixth message may comprise a PSU header indicating the user on behalf of whom the services are activated. In this case, the services are activated on behalf of the retargeted party so the header is "PSU:<C>". The sixth message may comprise two or more Route headers.

At step S667, the application server 620 sends a seventh message to the invocation server 610. The seventh message may be a SIP INVITE comprising the address of the retargeted party. The seventh message may comprise an "X-Action:route" header and one or more Route headers, where the first Route header is the second Route header from the INVITE sent to the application server in step S666.

At step S669, the invocation server 610 determines that activation of further services is not required and sends a final message to the operator network 630 via the secure signalling channel. The final message may be a SIP INVITE comprising the address of the retargeted party, e.g. "INVITE <C>".

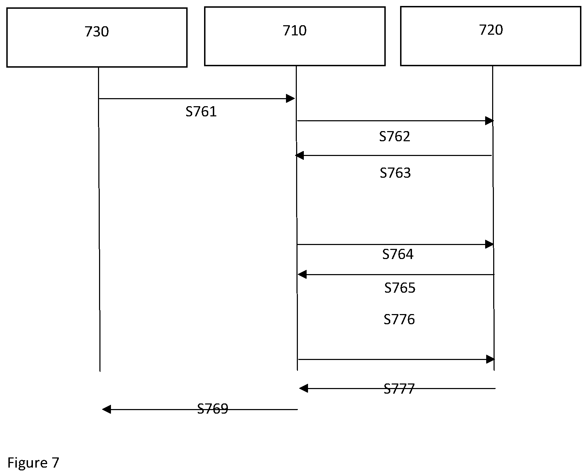

Figure 7 illustrates the messaging flow for an originating call (in which the calling party is served by the operator network) towards an internal user (in other words, the called party is also served by the operator network) with retargeting to external (in other words, the called party has a call redirect service enabled that causes the call to be redirected to another party, where the redirected party is served by a different network). In contrast to the above cases, an additional service is required for the redirected leg of the call but the service is required on behalf of party B, the internal user with retargeting enabled. The illustrated steps are:

| | |
|---|---|
| S761: | INVITE <B> |
| S762: | INVITE <B> |
| | PSU:<A> |
| | Route:<IP-ApplicationServer;call=service_orig> |
| | Route:<IP-InvocationServer> |
| S763: | INVITE <B> |
| | X-Action:term |
| | Route:<IP-InvocationServer> |
| | PSU:<B> |
| S764: | INVITE <B> |
| | PSU:<B> |
| | Route:<IP-ApplicationServer;call=service> |
| | Route:<IP-InvocationServer> |
| S765: | INVITE <C> |
| | X-Action:orig |
| | Route:<IP-InvocationServer> |
| | PSU:<B> |
| S776: | INVITE <C> |
| | PSU:<B> |
| | Route:<IP-ApplicationServer;call=service_orig> |
| | Route:<IP-InvocationServer> |
| S777: | INVITE <C> |
| | X-Action:route |
| | Route:<IP-InvocationServer> |
| S769: | INVITE <C> |

At step S761, the invocation server 710 receives a first message from operator network 730 via the secure signalling channel. The first message may be a SIP INVITE comprising an address of the called party.

At step S762, the invocation server 710 sends a second message to the application server 720. The second message may be a SIP INVITE comprising the address of the called party. The second message may comprise a PSU header indicating the user on behalf of whom the services are activated. In this case, the services are activated on behalf of the calling party so the header is "PSU:<A>". The second message may comprise two or more Route headers. The first route header may comprise an address of the application server, a service name ("call=service_orig"). Unlike in some of the examples above, the "orig" parameter is not included in this example. Instead, a different service name "service_orig" is used to indicate that the trigger is orig. The skilled person will understand that there are different ways for the invocation server to indicate the trigger to the application server. One way is by including the "orig" parameter where the trigger is orig and another is by using a different service names (in the "call=" parameter) for different triggers. These are alternative implementations of the invention and either is suitable. The second route header may comprise an address of the invocation server.

At step S763, the application server 720 determines that one or more services are required for the terminating party of the session and sends a third message to the invocation server 710. The third message may be a SIP INVITE comprising the address of the called party. As a result of the application server 720 determining that one or more services are required for the terminating party of the session, the third message may comprise an "X-Action:term" header, which indicates to the invocation server 710 that one or more services are required for the called party (during the terminating phase of the call). The third message may comprise a PSU header indicating the user on behalf of whom the one or more services are required during the terminating phase of the call. In this case, the services are required on behalf of the terminating party, which is party B so the header is "PSU:<B>". The third message may comprise one or more Route headers, where the first Route header is the second Route header from the INVITE sent to the application server in step S762.

At step S764, the invocation server 710 determines based on the headers that one or more services are required for the called party and sends a fourth message to the application server 720. The fourth message may be a SIP INVITE comprising the address of the called party. The fourth message may comprise a PSU header indicating the user on behalf of whom the services are activated. In this case, the services are activated on behalf of the called party so the header is "PSU:<B>". The fourth message may comprise two or more Route headers.

At step S765, the application server 720 determines that the called party has a retargeting service enabled. Unlike step S665 described with respect to Figure 6, the application server 720 determines at step S765 that one or more additional services are required *on behalf of party B,* and sends a fifth message to the invocation server 710 The fifth message indicates that the session should be retargeted to party C (an external party in this example) and comprises an address of party C. The fifth message may be a SIP INVITE e.g. "INVITE <C>". The address of the retargeted party may be referred to as a "redirected address". The fifth message may comprise an "X-Action:orig" header, which indicates to the invocation server 710 that one or more additional services are required on behalf of party B (the party having redirect enabled). For the purposes of enabling these services, the "X-Action:orig" header is used and it may seem in the subsequent flow as if B had initiated the call, whereas actually a redirect is enabled on behalf of B. The fifth message may comprise a PSU header indicating the user on behalf of whom the one or more services are required, which is party B so the header is "PSU:<B>".

At step S776, the invocation server 710 determines, based on the headers of the fifth message, that one or more services are required for party B and sends a message to the application server 720. The message at step S776 may be a SIP INVITE comprising the address of the retargeted party e.g. "INVITE <C>". The message at step S776 may comprise a PSU header indicating the user on behalf of whom the services are activated. In this case, the services are activated on behalf of party B so the header is "PSU:<B>". The message at step S776 may comprise two or more Route headers. The first route header may comprise an address of the application server and a service name ("call=service_orig").

At step S777, the application server 720 sends a response to the invocation server 710.
The message at step S777 may be a SIP INVITE comprising the address of the retargeted party. The ninth message may comprise an "X-Action:route" header and one or more Route headers, where the first Route header is the second Route header from the INVITE sent to the application server in step S776.

At step S769, the invocation server 710 determines that activation of further services is not required and sends a final message to the operator network 730 via the secure signalling channel. The final message may be a SIP INVITE comprising the address of the retargeted party, e.g. "INVITE <C>".

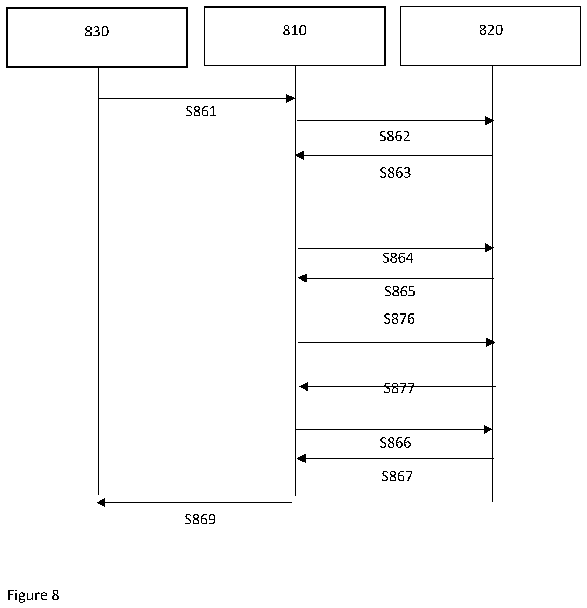

Figure 8 illustrates the messaging flow for an originating call (in which the calling party is served by the operator network) towards an internal user (in other words, the called party is also served by the operator network) with retargeting to internal (in other words, the called party has a call redirect service enabled that causes the call to be redirected to another party, where the redirected party is served by the operator network). As with the example illustrated in Figure 7, an additional service is required for the redirected leg of the call and the service is required on behalf of party B (the internal user with retargeting enabled). Additionally, since the user to whom the call is retarget is an internal user (party C), the network may provide one or more services on behalf of this user as well (similar to the case illustrated in Figure 6). The illustrated steps are:

| | |
|---|---|
| S861: | INVITE <B> |
| S862: | INVITE <B> |
| | PSU:<A> |
| | Route:<IP-ApplicationServer;call=service_orig> |
| | Route:<IP-InvocationServer> |
| S863: | INVITE <B> |
| | X-Action:term |
| | Route:<IP-InvocationServer> |
| | PSU:<B> |
| S864: | INVITE <B> |
| | PSU:<B> |
| | Route:<IP-ApplicationServer;call=service> |
| | Route:<IP-InvocationServer> |
| S865: | INVITE <C> |
| | X-Action:orig |
| | PSU:<B> |
| | Route:<IP-InvocationServer> |
| S876: | INVITE <C> |
| | PSU:<B> |
| | Route:<IP-ApplicationServer;call=service_orig> |
| | Route:<IP-InvocationServer> |
| S877: | INVITE <C> |
| | X-Action:term |
| | Route:<IP-InvocationServer> |
| | PSU:<C> |
| S866: | INVITE <C> |
| | PSU:<C> |
| | Route:<IP-ApplicationServer;call=service> |
| | Route:<IP-InvocationServer> |
| S867: | INVITE <C> |
| | X-Action:route |
| | Route:<IP-InvocationServer> |
| S869: | INVITE <C> |

Steps S861 to S865 are equivalent to steps S761 to S765.

At step S876, the invocation server 810 determines, based on the headers of the fifth message (at step S865), that one or more additional services are required for party B and sends an additional message to the application server 820. The message at step S876 may be a SIP INVITE comprising the address of the retargeted party e.g. "INVITE <C>". The message at step S876 may comprise a PSU header indicating the user on behalf of whom the services are activated. In this case, the services are activated on behalf of party B so the header is "PSU:<B>". The message at step S876 may comprise two or more Route headers. The first route header may comprise an address of the application server and a service name ("call=service_orig").

At step S877, the application server 820 determines that the party to whom the call should be retargeted (party C) is an internal party (served by the operator network). Then, the application server 820 determines that one or more services are required for the retargeted party, and sends a response to the invocation server 810 (a response to the additional message at step S876). The message at step S877 may be a SIP INVITE comprising the address of the retargeted party e.g. "INVITE <C>". The message at step S877 may comprise an "X-Action:term" header, which indicates to the invocation server 810 that one or more services are required for the retargeted party during the terminating phase of the call. The message at step S877 may comprise a PSU header indicating the user on behalf of whom the one or more services are required during the terminating phase of the call. In this case, the services are required on behalf of the retargeted party, which is party C so the header is "PSU:<C>". The message at step S877 may further comprise one or more Route headers, where the first Route header is the second Route header from the INVITE sent to the application server in step S876.

At step S866, the invocation server 810 determines, based on the headers of the message at step S877, that one or more services are required for the retargeted party and sends a message to the application server 820. The message at step S866 may be a SIP INVITE comprising the address of the retargeted party e.g. "INVITE <C>". The message at step S866 may comprise a PSU header indicating the user on behalf of whom the services are activated. In this case, the services are activated on behalf of the retargeted party so the header is "PSU:<C>". The message at step S866 may comprise two or more Route headers.

At step S867, the application server 820 sends a response to the invocation server 810. The message at step S867 may be a SIP INVITE comprising the address of the retargeted party. The message at step S867 may comprise an "X-Action:route" header and one or more Route headers, where the first Route header is the second Route header from the INVITE sent to the application server in step S866.

At step S869, the invocation server 810 determines that activation of further services is not required and sends a final message to the operator network 830 via the secure signalling channel. The final message may be a SIP INVITE comprising the address of the retargeted party, e.g. "INVITE <C>".

In the methods described above in relation to Figures 7 and 8, there are two separate messages sent from the invocation server to the application server on behalf of party B (where B is the PSU). In an alternative method, the application server and/or invocation server may evaluate the services required on behalf of party B prior to executing the call diversion and therefore the second call to the invocation server with party B as the PSU (steps S766 and S866) may not be required. In this case, the call flow would resemble that illustrated in Figure 6 but with additional services being executed on behalf of party B on receipt of the message at step S664, at the same time the redirect is performed at step S665.

In any case, the call flow described in relation to Figures 7 and 8 is closer to the behaviour of a normal CSCF (i.e. if the application server was within the IMS and no invocation server was required). Therefore, the methods described in relation to Figures 7 and 8 may be simpler (with fewer modifications to the application server required), may be more flexible (as the range of serves that can be fulfilled on behalf of party B may be improved) and may also bring additional benefits.

### Alternatives

For simplicity, the above examples illustrate scenarios where the services are provided by one application server. However, (as mentioned earlier), there may be a plurality of application servers in the remote network. The application servers may be provided for redundancy or load balancing. The application servers may be provided to provide services for different groups of users. The application servers may be configured to each provide different services.

Moreover, in some scenarios, there may be some application servers in the remote network and some application servers in the IMS at the operator network (on the other side of the secure signalling channel). In such a scenario, services that are outside of the scope of the application server in the remote network may be executed by one or more application servers that reside on the IMS network of the operator. In this case, the call signalling may be routed via the secure signalling channel to the IMS network.

It is an objective of the methods described above to minimise traffic via the secure signalling channel by providing an invocation server that resides in the remote network and makes all the required calls to the application servers that also reside in the remote network, without routing the call signalling to the operator IMS network and back again unnecessarily. Nevertheless, where services are provided by different application servers that reside in the operator IMS network, it may be necessary in some cases to route the signalling via the secure signalling channel and back again.

Where possible, the invocation server may ensure that all services that are provided by application servers residing in the remote network are activated on behalf of all parties before/after activating services that are provided by application servers in the operator IMS network. In this way, the load on the secure signalling channel may be reduced.

The list of messages and steps in the method is not comprehensive and additional steps or messages may be exchanged between the method steps described. For example, a SIP client may send a "100 Trying" and/or a "180 Ringing" message after receiving an "INVITE" but before sending a "200 OK". This may indicate that the request is being processed or that a user device is ringing.

The term "endpoint" has been used to refer to signalling and media destinations. These may alternatively be referred to as "terminals". They may also be described as devices or "subscribers" that may have an "address", "number" or "identifier".

An "address" could include a SIP signalling address (e.g. the "from" field in a SIP message). Alternatively, an "address" could be a "media address". A "media address" refers to an address to which session media is sent, once a session has been established (e.g. an SDP media address of an endpoint).

Whilst the above specific examples refer to "calls", the proposed signalling method may be used to establish different types of session between endpoints. These may include:
- voice calls;
- non-voice calls;
- video calls;
- video and voice calls;
- messaging;
- gaming;
- and the like.

The endpoints/parties (A party, B party, C party) may be UEs in a 3GPP+ network. As described above, these may be one or more mobile telephones, such as a smartphone. However, this is not essential. Signalling (such as SIP) may be used to establish a connection but the actual endpoint device could be a legacy device connected to the "plain old telephone service", POTS, for example.

## Claims

1. A method of managing services for a telecommunications session handled by a telecommunications network (130), the method comprising:
receiving, at an invocation server (110) in a remote network (100), wherein the remote network (100) is remote from the telecommunications network (130), a first message initiating a telecommunications session, wherein the message is received from the telecommunications network (130) via a secure signalling channel (140);
determining, based on the first message, one or more services required for the telecommunications session, wherein the one or more services are provided on behalf of a party served by the telecommunications network; and
based on the one or more services required, sending a second message comprising an indication of the party for which the one or more services are required to an application server (120) in the remote network (100), wherein the application server (120) is configured to provide one or more services, wherein the second message causes the application server (120) to provide the one or more services for the telecommunications session.

2. The method of claim 1, wherein:
the telecommunications network (130) is an Internet Protocol, IP, Multimedia Subsystem, IMS, network; and/or
the remote network (100) is cloud-hosted network.

3. The method of any preceding claim, wherein the telecommunications session is a Session Initiation Protocol, SIP, session.

4. The method of claim 3, wherein:
the first message is a SIP INVITE; and/or
the secure signalling channel (140) is a SIP trunk.

5. The method of any preceding claim, wherein the telecommunications session is a voice or video call.

6. The method of any preceding claim, wherein the one or more services include one or more of the following:
call recording; and
call forwarding.

7. The method of any preceding claim, wherein the method further comprises:
receiving, from the application server (120), a third message in response to the second message, wherein the third message comprises instructions regarding the signalling route for the session.

8. The method of claim 7, wherein the session is a session between a calling party and a called party, wherein the second message comprises the indication that one or more services are required for the calling party, wherein the second message causes the application server (120) to provide the one or more services for the calling party, wherein the method further comprises:
determining, by the invocation server (110), that the one or more services are required for the called party of the telecommunications session; and
based on the one or more services required, sending a fourth message to the application server (120) in the remote network (100), wherein the fourth message causes the application server (120) to provide the one or more services for the called party.

9. The method of any preceding claim, wherein the session is a session between a calling party and a called party, the method further comprising:
receiving, by the application server (120), the second message from the invocation server;
determining, by the application server (120), whether the called party is served by the telecommunications network (130) or a separate telecommunications network; and
sending, from the application server (120) to the invocation server (110), a third message in response to the second message, wherein the third message comprises instructions regarding the signalling route for the session.

10. The method of claim 9, wherein the one or more services that the application server (120) is configured to provide comprises a call forwarding service, wherein the application server (120) is configured to substitute an address of the called party with a redirected address, and wherein either:
the redirected address is a party served by a different telecommunications network and the method further comprises sending, by the invocation server (110), a final message via the secure signalling channel;
the redirected address is a party served by the telecommunications network (130) and the method further comprises determining, by the invocation server (110), that one or more services are not required for the redirected address and sending, by the invocation server (110), a final message via the secure signalling channel (140); or
the redirected address is a party served by the telecommunications network (130) and the method further comprises determining, by the invocation server (110), that one or more services are required for the redirected address and, based on the one or more services required, sending a sixth message to the application server (120) in the remote network (100), wherein the sixth message causes the application server (120) to provide the one or more services for the redirected address.

11. The method of claim 10, wherein the method further comprises determining, by the invocation server (110), that one or more additional services are required for the called party and, based on the one or more additional services required, sending an additional message to the application server (120) in the remote network (100), wherein the additional message causes the application server (120) to provide the one or more additional services for the called party.

12. The method of any preceding claim, further comprising:
determining that an address of the called party comprises a routing prefix; and
removing the routing prefix from an address of the called party that is included in the third message.

13. A server configured to perform the method of any preceding claim.

14. Computer software comprising instructions that, when executed on a processor of a computer, cause the computer to perform the method of any of claims 1 to 12.

15. A system for managing services for sessions handled by a telecommunications network (130), the system comprising:
a remote network (100), wherein the remote network (100) is remote from the telecommunications network (130), the remote network (100) comprising:
an application server (120) configured to provide services; and
an invocation server (110) configured to:
receive messages initiating telecommunications sessions from the telecommunications network (130) via a secure signalling channel (140);
for each message:
determine one or more services required for the respective telecommunications session, wherein the services are provided on behalf of a party served by the telecommunications network; and
based on the one or more services required, send a message comprising an indication of the party for which the one or more services are required to the application server (120), wherein the message causes the application server (120) to provide the one or more services for the respective telecommunications session.

## Patentansprüche

1. Verfahren zum Verwalten von Diensten für eine Telekommunikationssitzung, die durch ein Telekommunikationsnetzwerk (130) abgewickelt wird, wobei das Verfahren umfasst:
Empfangen, an einem Aufrufserver (110) in einem entfernten Netzwerk (100), wobei das entfernte Netzwerk (100) von dem Telekommunikationsnetzwerk (130) entfernt ist, einer ersten Nachricht, die eine Telekommunikationssitzung einleitet, wobei die Nachricht über einen sicheren Signalisierungskanal (140) von dem Telekommunikationsnetzwerk (130) empfangen wird;
Bestimmen, auf Basis der ersten Nachricht, eines oder mehrerer Dienste, die für die Telekommunikationssitzung erforderlich sind, wobei der eine oder die mehreren Dienste im Namen eines Teilnehmers bereitgestellt werden, der von dem Telekommunikationsnetzwerk versorgt wird; und
auf Basis des einen oder der mehreren erforderlichen Dienste, Senden einer zweiten Nachricht umfassend eine Angabe des Teilnehmers, für den der eine oder die mehreren Dienste erforderlich sind, an einen Anwendungsserver (120) in dem entfernten Netzwerk (100), wobei der Anwendungsserver (120) zum Bereitstellen eines oder mehrerer Dienste konfiguriert ist, wobei die zweite Nachricht veranlasst, dass der Anwendungsserver (120) den einen oder die mehreren Dienste für die Telekommunikationssitzung bereitstellt.

2. Verfahren nach Anspruch 1, wobei:
es sich bei dem Telekommunikationsnetzwerk (130) um ein Internetprotokoll-Multimedia-Subsystem-Netzwerk (Internet Protocol (IP) Multimedia Subsystem, IMS-Netzwerk) handelt; und/oder
es sich bei dem entfernten Netzwerk (100) um ein in der Cloud gehostetes Netzwerk handelt.

3. Verfahren nach einem vorstehenden Anspruch, wobei es sich bei der Telekommunikationssitzung um eine Sitzungseinleitungsprotokollsitzung (Session Initiation Protocol, SIP-Sitzung) handelt.

4. Verfahren nach Anspruch 3, wobei:
die erste Nachricht eine SIP INVITE ist; und/oder
der sichere Signalisierungskanal (140) ein SIP-Trunk ist.

5. Verfahren nach einem vorstehenden Anspruch, wobei es sich bei der Telekommunikationssitzung um einen Sprach- oder Videoanruf handelt.

6. Verfahren nach einem vorstehenden Anspruch, wobei der eine oder die mehreren Dienste eine oder mehrere der folgenden umfassen:
Anrufaufzeichnung; und
Anrufweiterleitung.

7. Verfahren nach einem vorstehenden Anspruch, wobei das Verfahren ferner umfasst:
Empfangen, von dem Anwendungsserver (120), einer dritten Nachricht als Antwort auf die zweite Nachricht, wobei die dritte Nachricht Anweisungen bezüglich der Signalisierungsroute für die Sitzung umfasst.

8. Verfahren nach Anspruch 7, wobei es sich bei der Sitzung um eine Sitzung zwischen einem anrufenden Teilnehmer und einem angerufenen Teilnehmer handelt, wobei die zweite Nachricht die Angabe umfasst, dass ein oder mehrere Dienste für den anrufenden Teilnehmer erforderlich sind, wobei die zweite Nachricht veranlasst, dass der Anwendungsserver (120) den einen oder die mehreren Dienste für den anrufenden Teilnehmer bereitstellt, wobei das Verfahren ferner umfasst:
Bestimmen, durch den Aufrufserver (110), dass der eine oder die mehreren Dienste für den angerufenen Teilnehmer der Telekommunikationssitzung erforderlich sind; und
auf Basis des einen oder der mehreren erforderlichen Dienste, Senden einer vierten Nachricht an den Anwendungsserver (120) in dem entfernten Netzwerk (100), wobei die vierte Nachricht veranlasst, dass der Anwendungsserver (120) den einen oder die mehreren Dienste für den angerufenen Teilnehmer bereitstellt.

9. Verfahren nach einem vorstehenden Anspruch, wobei es sich bei der Sitzung um eine Sitzung zwischen einem anrufenden Teilnehmer und einem angerufenen Teilnehmer handelt, wobei das Verfahren ferner umfasst:
Empfangen, durch den Anwendungsserver (120), der zweiten Nachricht von dem Aufrufserver;
Bestimmen, durch den Anwendungsserver (120), ob der angerufene Teilnehmer durch das Telekommunikationsnetzwerk (130) oder ein separates Telekommunikationsnetzwerk versorgt wird; und
Senden, von dem Anwendungsserver (120) an den Aufrufserver (110), einer dritten Nachricht als Antwort auf die zweite Nachricht, wobei die dritte Nachricht Anweisungen bezüglich der Signalisierungsroute für die Sitzung umfasst.

10. Verfahren nach Anspruch 9, wobei der eine oder die mehreren Dienste, die der Anwendungsserver (120) bereitstellen soll, einen Anrufweiterleitungsdienst umfassen, wobei der Anwendungsserver (120) derart konfiguriert ist, dass eine Adresse des angerufenen Teilnehmers durch eine umgeleitete Adresse ersetzt wird, und wobei entweder:
die umgeleitete Adresse ein Teilnehmer ist, der durch ein anderes Telekommunikationsnetzwerk versorgt wird, und das Verfahren ferner das Senden, durch den Aufrufserver (110), einer letzten Nachricht über den sicheren Signalisierungskanal umfasst;
die umgeleitete Adresse ein Teilnehmer ist, der durch das Telekommunikationsnetzwerk (130) versorgt wird, und das Verfahren ferner das Bestimmen umfasst, durch den Aufrufserver (110), dass ein oder mehrere Dienste für die umgeleitete Adresse nicht erforderlich sind, und das Senden, durch den Aufrufserver (110), einer letzten Nachricht über den sicheren Signalisierungskanal (140); oder
die umgeleitete Adresse ein Teilnehmer ist, der durch das Telekommunikationsnetzwerk (130) versorgt wird, und das Verfahren ferner das Bestimmen umfasst, durch den Aufrufserver (110), dass ein oder mehrere Dienste für die umgeleitete Adresse erforderlich sind, und, auf Basis des einen oder der mehreren erforderlichen Dienste, das Senden einer sechsten Nachricht an den Anwendungsserver (120) in dem entfernten Netzwerk (100), wobei die sechste Nachricht veranlasst, dass der Anwendungsserver (120) den einen oder die mehreren Dienste für die umgeleitete Adresse bereitstellt.

11. Verfahren nach Anspruch 10, wobei das Verfahren ferner das Bestimmen umfasst, durch den Aufrufserver (110), dass ein oder mehrere zusätzliche Dienste für den angerufenen Teilnehmer erforderlich sind, und, auf Basis des einen oder der mehreren zusätzlichen erforderlichen Dienste, das Senden einer zusätzlichen Nachricht an den Anwendungsserver (120) in dem entfernten Netzwerk (100), wobei die zusätzliche Nachricht veranlasst, dass der Anwendungsserver (120) den einen oder die mehreren zusätzlichen Dienste für den angerufenen Teilnehmer bereitstellt.

12. Verfahren nach einem vorstehenden Anspruch, ferner umfassend:
Bestimmen, dass eine Adresse des angerufenen Teilnehmers ein Routingpräfix umfasst; und
Entfernen des Routingpräfix aus einer Adresse des angerufenen Teilnehmers, die in der dritten Nachricht enthalten ist.

13. Server, konfiguriert zum Durchführen des Verfahrens nach einem vorstehenden Anspruch.

14. Computersoftware umfassend Anweisungen, die bei Ausführung auf einer Verarbeitungseinheit eines Computers veranlassen, dass der Computer das Verfahren nach einem der Ansprüche 1 bis 12 durchführt.

15. System zum Verwalten von Diensten für Sitzungen, die durch ein Telekommunikationsnetzwerk (130) abgewickelt werden, wobei das System umfasst:
ein entferntes Netzwerk (100), wobei das entfernte Netzwerk (100) von dem Telekommunikationsnetzwerk (130) entfernt ist, wobei das entfernte Netzwerk (100) umfasst:
einen Anwendungsserver (120), konfiguriert zum Bereitstellen von Diensten; und
einen Aufrufserver (110), konfiguriert zum:
Empfangen von Nachrichten, die Telekommunikationssitzungen einleiten, über einen sicheren Signalisierungskanal (140) von dem Telekommunikationsnetzwerk (130);
für jede Nachricht:
Bestimmen eines oder mehrerer Dienste, die für die jeweilige Telekommunikationssitzung erforderlich sind, wobei die Dienste im Namen eines Teilnehmers bereitgestellt werden, der durch das Telekommunikationsnetzwerk versorgt wird; und
auf Basis des einen oder der mehreren erforderlichen Dienste, Senden einer Nachricht umfassend eine Angabe des Teilnehmers, für den der eine oder die mehreren Dienste erforderlich sind, an den Anwendungsserver (120), wobei die Nachricht veranlasst, dass der Anwendungsserver (120) den einen oder die mehreren Dienste für die jeweilige Telekommunikationssitzung bereitstellt.

## Revendications

1. Procédé de gestion de services pour une session de télécommunications assurée par un réseau de télécommunications (130), le procédé comprenant :
la réception, au niveau d'un serveur d'invocation (110) dans un réseau distant (100), dans lequel le réseau distant (100) est distant du réseau de télécommunications (130), d'un premier message démarrant une session de télécommunications, dans lequel le message est reçu à partir du réseau de télécommunications (130) via un canal de signalisation sécurisé (140) ;
la détermination, sur la base du premier message, d'un ou de plusieurs services requis pour la session de télécommunications, dans lequel les un ou plusieurs services sont fournis pour le compte d'une partie desservie par le réseau de télécommunications ; et
sur la base des un ou plusieurs services requis, l'envoi d'un deuxième message comprenant une indication de la partie pour laquelle les un ou plusieurs services sont requis à un serveur d'application (120) dans le réseau distant (100), dans lequel le serveur d'application (120) est configuré pour fournir un ou plusieurs services, dans lequel le deuxième message amène le serveur d'application (120) à fournir les un ou plusieurs services pour la session de télécommunications.

2. Procédé selon la revendication 1, dans lequel :
le réseau de télécommunications (130) est un réseau à sous-système multimédia par protocole Internet, IP, IMS ; et/ou
le réseau distant (100) est un réseau hébergé en nuage.

3. Procédé selon l'une quelconque des revendications précédentes, dans lequel la session de télécommunications est une session à protocole d'initiation de session, SIP.

4. Procédé selon la revendication 3, dans lequel :
le premier message est une INVITE SIP ; et/ou
le canal de signalisation sécurisé (140) est une liaison SIP.

5. Procédé selon l'une quelconque des revendications précédentes, dans lequel la session de télécommunications est un appel vocal ou vidéo.

6. Procédé selon l'une quelconque des revendications précédentes, dans lequel les un ou plusieurs services comportent un ou plusieurs parmi les suivants :
l'enregistrement d'appel ; et
le transfert d'appel.

7. Procédé selon l'une quelconque des revendications précédentes, dans lequel le procédé comprend en outre :
la réception, à partir du serveur d'application (120), d'un troisième message en réponse au deuxième message, dans lequel le troisième message comprend des instructions concernant la route de signalisation pour la session.

8. Procédé selon la revendication 7, dans lequel la session est une session entre une partie appelante et une partie appelée, dans lequel le deuxième message comprend l'indication selon laquelle un ou plusieurs services sont requis pour la partie appelante, dans lequel le deuxième message amène le serveur d'application (120) à fournir les un ou plusieurs services pour la partie appelante, dans lequel le procédé comprend en outre :
la détermination, par le serveur d'invocation (110), du fait que les un ou plusieurs services sont requis pour la partie appelée de la session de télécommunications ; et
sur la base des un ou plusieurs services requis, l'envoi d'un quatrième message au serveur d'application (120) dans le serveur distant (100), dans lequel le quatrième message amène le serveur d'application (120) à fournir les un ou plusieurs services pour la partie appelée.

9. Procédé selon l'une quelconque des revendications précédentes, dans lequel la session est une session entre une partie appelante et une partie appelée, le procédé comprenant en outre :
la réception, par le serveur d'application (120), du deuxième message à partir du serveur d'invocation ;
la détermination, par le serveur d'application (120), du fait que la partie appelée est desservie par le réseau de télécommunications (130) ou un réseau de télécommunications distinct ; et
l'envoi, du serveur d'application (120) au serveur d'invocation (110), d'un troisième message en réponse au deuxième message, dans lequel le troisième message comprend des instructions concernant la route de signalisation pour la session.

10. Procédé selon la revendication 9, dans lequel les un ou plusieurs services que le serveur d'application (120) est configuré pour fournir comprennent un service de transfert d'appel, dans lequel le serveur d'application (120) est configuré pour remplacer une adresse de la partie appelée par une adresse redirigée, et dans lequel soit :
l'adresse redirigée est une partie desservie par un réseau de télécommunications différent et le procédé comprend en outre l'envoi, par le serveur d'invocation (110), d'un message final via le canal de signalisation sécurisé ; soit
l'adresse redirigée est une partie desservie par le réseau de télécommunications (130) et le procédé comprend en outre la détermination, par le serveur d'invocation (110), du fait qu'un ou plusieurs services ne sont pas requis pour l'adresse redirigée et l'envoi, par le serveur d'invocation (110), d'un message final via le canal de signalisation sécurisé (140) ; soit
l'adresse redirigée est une partie desservie par le réseau de télécommunications (130) et le procédé comprend en outre la détermination, par le serveur d'invocation (110), du fait qu'un ou plusieurs services sont requis pour l'adresse redirigée et, sur la base des un ou plusieurs services requis, l'envoi d'un sixième message au serveur d'application (120) dans le réseau distant (100), dans lequel le sixième message amène le serveur d'application (120) à fournir les un ou plusieurs services pour l'adresse redirigée.

11. Procédé selon la revendication 10, dans lequel le procédé comprend en outre la détermination, par le serveur d'invocation (110), du fait qu'un ou plusieurs services supplémentaires sont requis pour la partie appelée et, sur la base des un ou plusieurs services supplémentaires requis, l'envoi d'un message supplémentaire au serveur d'application (120) dans le réseau distant (100), dans lequel le message supplémentaire amène le serveur d'application (120) à fournir les un ou plusieurs services supplémentaires pour la partie appelée.

12. Procédé selon l'une quelconque des revendications précédentes, comprenant en outre :
la détermination du fait qu'une adresse de la partie appelée comprend un préfixe de routage ; et
le retrait du préfixe de routage d'une adresse de la partie appelée qui est incluse dans le troisième message.

13. Serveur configuré pour réaliser le procédé de l'une quelconque des revendications précédentes.

14. Logiciel d'ordinateur comprenant des instructions qui, lorsqu'elles sont exécutées sur un processeur d'un ordinateur, amènent l'ordinateur à réaliser le procédé de l'une quelconque des revendications 1 à 12.

15. Système pour la gestion de services pour des sessions assurées par un réseau de télécommunications (130), le système comprenant :
un réseau distant (100), dans lequel le réseau distant (100) est distant du réseau de télécommunications (130), le réseau distant (100) comprenant :
un serveur d'application (120) configuré pour fournir des services ; et
un serveur d'invocation (110) configuré pour :
recevoir des messages démarrant des sessions de télécommunications à partir du réseau de télécommunications (130) via un canal de signalisation sécurisé (140) ;
pour chaque message :
déterminer un ou plusieurs services requis pour la session de télécommunications respective, dans lequel les services sont fournis pour le compte d'une partie desservie par le réseau de télécommunications ; et
sur la base des un ou plusieurs services requis, envoyer un message comprenant une indication de la partie pour laquelle les un ou plusieurs services sont requis au serveur d'application (120), dans lequel le message amène le serveur d'application (120) à fournir les un ou plusieurs services pour la session de télécommunications respective.
